# EUROPÄISCHE PATENTSCHRIFT

(11) **EP 3 297 895 B1**
(45) Veröffentlichungstag und Bekanntmachung des Hinweises auf die Patenterteilung: **15.01.2020**
(21) Anmeldenummer: 16724616.4
(22) Anmeldetag: 17.05.2016
(51) Int. Cl.: B62D 25/20, B62D 29/00

(54) **QUERTRÄGER FÜR EIN KRAFTFAHRZEUG**
TRANSVERSE CARRIER FOR A MOTOR VEHICLE
TRAVERSE POUR VÉHICULE AUTOMOBILE

(30) Priorität: 22.05.2015 DE 102015209540
(43) Veröffentlichungstag der Anmeldung: 28.03.2018
(73) Patentinhaber: Bayerische Motoren Werke Aktiengesellschaft, 80809 München (DE)
(72) Erfinder: RÄPPLE, Marcus, 85469 Walpertskirchen (DE); SCHAUPPEL, Florian, 80935 München (DE)
(86) Internationale Anmeldenummer: PCT/EP2016/061032
(87) Internationale Veröffentlichungsnummer: WO 2016/188802

(56) Entgegenhaltungen:
- EP-A1- 2 865 582
- EP-A2- 2 011 719
- WO-A1-2009/121509
- DE-A1- 10 016 150
- DE-A1- 10 121 377

## Beschreibung

Die folgende Erfindung bezieht sich auf einen Querträger für eine Kraftfahrzeugkarosserie bzw. ein Kraftfahrzeug mit einem Querträgerhauptelement und einem Querträgerverstärkungselement.

Insbesondere bezieht sich die vorliegende Erfindung auf einen sogenannten Sitzquerträger für ein Kraftfahrzeug.

Es ist bekannt bei einer selbsttragenden Kraftfahrzeugkarosserie insbesondere im Bereich einer Fahrgastzelle Querträger in sogenannter Schalenbauweise zu verwenden. Ein bekannter Sitzquerträger besteht beispielsweise aus einem Querträgerhauptelement und einem damit verbundenen Querträgerverstärkungselement. Ein derartiger Sitzquerträger erstreckt sich in Fahrzeugquerrichtung von einem ersten Seitenschweller zu einem zweiten Seitenschweller oder zumindest von einem Seitenschweller zu einem Mitteltunnel. Der Sitzquerträger dient zur Versteifung und Erhöhung einer Festigkeit der Karosserie. Insbesondere ist der Sitzquerträger üblicherweise derart ausgestaltet, dass er bei einer seitlichen Kollision des Kraftfahrzeugs durch Verformung Kollisionsenergie absorbieren kann. Des Weiteren hat der Sitzquerträger die Aufgabe einen Fahrzeugsitz stabil an der Fahrzeugkarosserie zu verankern.

Die EP 2 011 719 A2 beschreibt die Merkmale des Oberbegriffs des unabhängigen Anspruchs 1.

Es ist die Aufgabe der vorliegenden Erfindung, einen Querträger zu schaffen, der bei geringem Gewicht ein großes Kollisionsenergieabsorptionsvermögen aufweist.

Diese Aufgabe wird durch einen Querträger gelöst, der die Merkmale von Patentanspruch 1 aufweist. Vorteilhafte Weiterbildungen der Erfindung sind in den abhängigen Patentansprüchen genannt.

Ein erfindungsgemäßer Querträger, insbesondere ein Sitzquerträger, für ein Kraftfahrzeug hat ein Querträgerhauptelement und ein Querträgerverstärkungselement. Zwischen dem Querträgerhauptelement und dem Querträgerverstärkungselement ist ein Hohlraum ausgebildet. In dem Hohlraum ist ein rohrförmiges Zusatzverstärkungselement angeordnet.

Ein derartiges rohrförmiges Zusatzverstärkungselement, das in dem Hohlraum ausgebildet ist, kann bei einem verhältnismäßig geringen Gewicht des Querträgers ein Ausknicken des Querträgers bei einer seitlichen Kollision des Kraftfahrzeugs verhindern. Das rohrförmige Zusatzverstärkungselement hat einen geschlossenen Querschnitt und kann damit querschnittsbedingt große Biegemomente aufnehmen. Ferner ist das rohrförmige Zusatzverstärkungselement in dem Hohlraum gefangen, so dass auch hierdurch ein Ausknicken erschwert ist. Somit kann beispielsweise das Querträgerverstärkungselement leichter bzw. mit einer dünneren Wandstärke ausgeführt werden und der Querträger kann damit insgesamt mit einfachen Mitteln bei geringem Gewicht mit gleicher oder höherer Festigkeit leichter ausgebildet werden.

Das rohrförmige Zusatzverstärkungselement kann beispielsweise einen kreisförmigen, quadratischen oder rechteckigen Querschnitt aufweisen.

Ferner kann das rohrförmige Zusatzverstärkungselement einen über seine Länge gleichbleibenden Querschnitt aufweisen.

Dies erleichtert eine Herstellung des rohrförmigen Zusatzverstärkungselements.

Vorteilhaft ist bei dem erfindungsgemäßen Querträger das Zusatzverstärkungselement aus einem Faserverbundwerkstoff ausgebildet. Hierdurch kann bei geeigneter Werkstoffauswahl bei geringerem Gewicht eine höhere Steifigkeit und Festigkeit des Zusatzverstärkungselements erzielt werden.

Bevorzugt sind die Fasern des Faserverbundwerkstoffs Endlosfasern.

Das Zusatzverstärkungselement aus einem Faserverbundwerkstoff mit Endlosfasern hat eine höhere Festigkeit und Steifigkeit.

Bevorzugt sind die Fasern des Faserverbundwerkstoffs Kohlenstofffasern und/oder Glasfasern und/oder Aramidfasern und/oder Naturfasern.

Kohlenstofffasern sind im Hinblick auf ein Gewicht und Festigkeit hierbei bevorzugt.

Das Querträgerhauptelement kann aus Stahl ausgebildet sein. Ebenso kann das Querträgerverstärkungselement aus Stahl ausgebildet sein.

Es sind jedoch auch andere metallische und nicht-metallische Werkstoffe wie Aluminiumlegierungen und Faserverbundwerkstoffe denkbar.

Gemäß einer bevorzugten Weiterbildung des Querträgers erstreckt sich der Hohlraum zumindest entlang eines Abschnitts in Längsrichtung des Querträgers.

Der Hohlraum kann an einem oberen Eckabschnitt des Querträgers ausgebildet sein.

Es können auch zwei Hohlräume an jeweils einem oberen Eckabschnitt des Querträgers ausgebildet sein.

Das Querträgerhauptelement kann einen im Wesentlichen u-förmigen Querschnitt aufweisen. Das Querträgerverstärkungselement kann einen stufenförmigen Abschnitt aufweisen.

Erfindungsgemäß wird der Querträger derart angepasst, dass er zur Anordnung im Bereich eines Bodens einer Fahrgastzelle und zur Absorption von Kollisionsenergie bei einer seitlichen Kollision des Kraftfahrzeugs geeignet ist.

Ferner kann der Querträger derart angepasst sein, dass er sich zwischen äußeren, unteren Längsträgen erstrecken kann. Ebenso kann der Querträger angepasst sein, so dass er sich zwischen einem äußeren, unteren Längsträger und einem Mitteltunnel erstrecken kann.

Weiterhin kann der Querträger derart ausgebildet sein, dass ein Fahrzeugsitz an dem Querträger fixierbar ist.

Die vorliegende Erfindung betrifft ferner eine Kraftfahrzeugkarosserie mit einem Querträger gemäß der vorliegenden Erfindung.

Vorstehend aufgeführte Merkmale und Weiterbildungen der Erfindung können, soweit möglich und sinnvoll, beliebig miteinander kombiniert werden.

Es folgt eine Kurzbeschreibung der Figuren.
- Fig. 1: ist eine perspektivische Schnittansicht eines Querträgers gemäß einem Ausführungsbeispiel der vorliegenden Erfindung.
- Fig. 2: ist eine schematische Schnittansicht des Querträgers gemäß dem Ausführungsbeispiel der vorliegenden Erfindung.

Im Folgenden ist unter Bezugnahme auf die Figuren ein Ausführungsbeispiel der vorliegenden Erfindung beschrieben.

Gemäß dem Ausführungsbeispiel der vorliegenden Erfindung hat ein Sitzquerträger 1, der ein erfindungsgemäßer Querträger ist, ein Querträgerhauptelement 3 und ein Querträgerverstärkungselement 5, das das Querträgerhauptelement 3 verstärkt. Der Sitzquerträger 1 erstreckt sich in eingebautem Zustand von einem Seitenschweller zu beispielsweise einem Mitteltunnel. Der Sitzquerträger 1 ist im Bereich einer vorderen Sitzreihe des Kraftfahrzeugs angeordnet. Der Sitzquerträger 1 kann der Anbindung eines Kraftfahrzeugsitzes an die Fahrzeugkarosserie dienen und hat ferner die Aufgabe im Falle einer seitlichen Kollision Kollisionsenergie durch Verformung abzubauen und damit einem Kraftfahrzeuginsassen zu schützen.

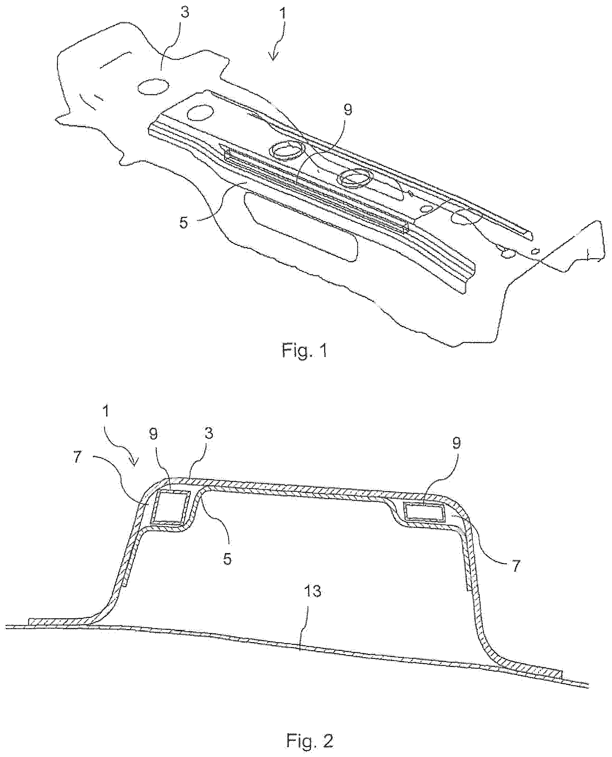

Das Querträgerhauptelement 3 und das Querträgerverstärkungselement 5 bestehen aus einem Stahlwerkstoff und sind miteinander über Schweißpunkte verschweißt. Der Sitzquerträger 1, insbesondere das Querträgerhauptelement 3, ist an ein Bodenblech 13 einer Fahrgastzelle des Kraftfahrzeugs geschweißt, wie in Figur 2 gezeigt ist. Das Querträgerhauptelement 3 des Sitzquerträgers 1 hat abschnittsweise einen im Wesentlichen u-förmigen Querschnitt. Das Querträgerverstärkungselement 5 hat einen symmetrischen gestuften Querschnitt. Das Querträgerverstärkungselement 5 ist in den u-förmigen Querschnitt des Querträgerhauptelements 3 eingebracht und an dem Querträgerhauptelement 3 bevorzugt durch Schweißen befestigt und erstreckt sich über einen Teilabschnitt des Querträgerhauptelements 3, wie in Figur 1 zu sehen ist. Durch den stufenförmigen Querschnitt des Querträgerverstärkungselements 5 ist jeweils ein Hohlraum 7, 8 an den oberen Kanten des Sitzquerträgers 1 ausgebildet. In diesen Hohlräumen 7, 8 ist jeweils ein rohrförmiges Zusatzverstärkungselement 9, 10 eingebracht. Das rohrförmigen Zusatzverstärkungselement 9, 10 besteht aus einem Faserverbundwerkstoff, insbesondere einem Faserverbundwerkstoff, der aus einer Kohlenstoffendlosfaser ausgebildet ist. Das Zusatzverstärkungselement 9, 10 hat einen über seine Länge konstanten Querschnitt und kann damit in einem kontinuierlichen Herstellungsverfahren einfach und kostengünstig hergestellt werden. Das Zusatzverstärkungselement 9, 10 hat einen geschlossenen Querschnitt und ist an das Querträgerhauptelement 3 und gegebenenfalls auch an das Querträgerverstärkungselement 5 geklebt.

Im Falle einer seitlichen Beanspruchung des Sitzquerträgers 1, das heißt einer Beanspruchung in seine Längsrichtung, erschweren die Zusatzverstärkungselemente 9, 10 ein Ausknicken des Sitzquerträgers 1 insgesamt und verbessern damit seine Abbaufähigkeit von Kollisionsenergie und seine Stabilität. Dadurch, dass das Zusatzverstärkungselement 9, 10 in einem Hohlraum mit einem geschlossenen Querschnitt eingebracht ist, kann das Zusatzverstärkungselement 9, 10 sogar in dem Fall wirken, in dem eine Verklebung 11 mit dem Querträgerhauptelement 3 oder dem Querträgerverstärkungselement 5 sich im Verlaufe der Kollision löst, da der Querschnitt des Zusatzverstärkungselements 9, 10 sozusagen in dem Hohlraum 7, 8 gefangen ist und damit weiterhin seine festigkeitserhöhende und steifigkeitserhöhende Wirkung auf den Sitzquerträger 1 insgesamt ausüben kann.

## Patentansprüche

1. Querträger (1), insbesondere Sitzquerträger, für ein Kraftfahrzeug mit einem Querträgerhauptelement (3) und einem Querträgerverstärkungselement (5), wobei zwischen dem Querträgerhauptelement (3) und dem Querträgerverstärkungselement (5) ein Hohlraum (7, 8) ausgebildet ist,
**dadurch gekennzeichnet, dass**
in dem Hohlraum (7, 8) ein rohrförmiges Zusatzverstärkungselement (9, 10) angeordnet ist, wobei der Querträger (1) zur Anordnung im Bereich eines Bodens einer Fahrgastzelle und zur Absorption von Kollisionsenergie bei einer seitlichen Kollision des Kraftfahrzeugs angepasst ist.

2. Querträger nach Patentanspruch 1, wobei das Zusatzverstärkungselement (9, 10) aus einem Faserverbundwerkstoff ausgebildet ist.

3. Querträger nach Patentanspruch 2, wobei der Faserverbundwerkstoff im Wesentlichen mit Endlosfasern gebildet ist.

4. Querträger nach Patentanspruch 2 oder 3, wobei die Fasern des Faserverbundwerkstoffs Kohlenstofffasern und/oder Glasfasern und/oder Aramidfasern und/oder Naturfasern sind.

5. Querträger nach einem der Patentansprüche 1 bis 4, wobei das Querträgerhauptelement (3) aus Stahl ausgebildet ist und/oder wobei das Querträgerverstärkungselement (5) aus Stahl ausgebildet ist.

6. Querträger nach einem der Patentansprüche 1 bis 5, wobei der Hohlraum (7, 8) sich zumindest entlang eines Abschnitts in Längsrichtung des Querträgers (1) erstreckt.

7. Querträger nach einem der Patentansprüche 1 bis 6, wobei der Hohlraum (7, 8) an einem oberen Eckabschnitt des Querträgers (1) ausgebildet ist.

8. Querträger nach einem der Patentansprüche 1 bis 7, wobei der Querträger (1) angepasst ist, sich zwischen zwei äußeren, unteren Längsträgern zu erstrecken, und/oder wobei der Querträger angepasst ist, sich zwischen einem äußeren, unteren Längsträger und einem Mitteltunnel zu erstrecken.

9. Querträger nach einem der Patentansprüche 1 bis 8, wobei der Querträger (1) derart ausgebildet ist, dass an dem Querträger (1) ein Fahrzeugsitz fixierbar ist.

10. Kraftfahrzeugkarosserie mit einem Querträger nach einem der Patentansprüche 1 bis 9.

## Claims

1. A transverse carrier (1), in particular a seat transverse carrier, for a motor vehicle, comprising a transverse carrier main element (3) and a transverse carrier reinforcing element (5), wherein a hollow space (7, 8) is formed between the transverse carrier main element (3) and the transverse carrier reinforcing element (5), **characterised in that**
an additional tubular reinforcing element (9, 10) is arranged in the hollow space (7, 8), wherein the transverse carrier (1) is adapted for arrangement in the floor region of a passenger compartment and for absorption of collision energy in a lateral collision of the motor vehicle.

2. A transverse carrier according to Claim 1, wherein the additional reinforcing element (9, 10) is made out of a fibre composite material.

3. A transverse carrier according to Claim 2, wherein the fibre composite material is primarily created with endless fibres.

4. A transverse carrier according to Claim 2 or 3, wherein the fibres of the fibre composite material are carbon fibres and/or glass fibres and/or aramid fibres and/or natural fibres.

5. A transverse carrier according to one of Claims 1 to 4, wherein the carrier main element (3) is made out of steel and/or wherein the transverse carrier reinforcing element (5) is made out of steel.

6. A transverse carrier according to one of Claims 1 to 5, wherein the hollow space (7, 8) extends over at least one section in the longitudinal direction of the transverse carrier (1).

7. A transverse carrier according to one of Claims 1 to 6, wherein the hollow space (7, 8) is formed at an upper corner section of the transverse carrier (1).

8. A transverse carrier according to one of Claims 1 to 7, wherein the transverse carrier (1) is adapted for extension between two outer, lower longitudinal carriers, and/or wherein the transverse carrier is adapted for extension between one outer, lower longitudinal carrier and a central tunnel.

9. A transverse carrier according to one of Claims 1 to 8, wherein the transverse carrier (1) is formed in such a way that a vehicle seat can be fixed to the transverse carrier (1).

10. Motor vehicle body with a transverse carrier according to one of Claims 1 to 9.

## Revendications

1. Traverse (1), en particulier traverse de siège destinée à un véhicule comprenant un élément principal de traverse (3) et un élément de renfort de traverse (5), un volume creux (7, 8) étant formé entre l'élément principal de traverse (3) et l'élément de renfort de traverse (5),
**caractérisée en ce que**
dans le volume creux (7, 8) est installé un élément de renfort tubulaire supplémentaire (9, 10), la traverse (1) étant adaptée pour être installée dans la zone du plancher de l'habitacle et pour absorber l'énergie de collision lors d'une collision latérale du véhicule.

2. Traverse conforme à la revendication 1,
**caractérisée en ce que**
l'élément de renfort supplémentaire (9, 10) est réalisé en un matériau composite renforcé par des fibres.

3. Traverse conforme à la revendication 2,
dans laquelle le matériau composite renforcé par des fibres est essentiellement constitué par des fibres sans fin.

4. Traverse conforme à la revendication 2 ou 3,
dans laquelle les fibres du matériau composite renforcé par des fibres sont des fibres de carbone et/ou des fibres de verre et/ou des fibres d'aramide et/ou des fibres naturelles.

5. Traverse conforme à l'une des revendications 1 à 4,
dans laquelle l'élément principal de traverse (3) est réalisé en acier et/ou l'élément de renfort de traverse (5) est réalisé en acier.

6. Traverse conforme à l'une des revendications 1 à 5,
dans laquelle le volume creux (7, 8) s'étend au moins le long d'un segment dans la direction longitudinale de la traverse (1).

7. Traverse conforme à l'une des revendications 1 à 6,
dans laquelle le volume creux (7, 8) est formé sur un segment de coin supérieur de la traverse (1).

8. Traverse conforme à l'une des revendications 1 à 7,
dans laquelle la traverse (1) est adaptée pour s'étendre entre deux longerons inférieurs externes et/ou la traverse est adaptée pour s'étendre entre un longeron inférieur externe et un tunnel médian.

9. Traverse conforme à l'une des revendications 1 à 8,
dans laquelle la traverse (1) est réalisée de sorte qu'un siège de véhicule puisse être fixé sur celle-ci.

10. Carrosserie de véhicule comprenant une traverse conforme à l'une des revendications 1 à 9.
